# EUROPÄISCHE PATENTANMELDUNG

(11) **EP 2 775 370 A2**
(43) Veröffentlichungstag der Anmeldung: **10.09.2014**
(21) Anmeldenummer: 14000524.0
(22) Anmeldetag: 13.02.2014
(51) Int. Cl.: G05D 23/19

(54) **Vorrichtung zum Heizen von Räumen, umfassend zumindest eine zentrale Wärmequelle und umfassend den Räumen zugeordnete Heizkreise**

(30) Priorität: 08.03.2013 DE 102013003933
(71) Anmelder: PAW GmbH & Co. KG, 31789 Hameln (DE)
(72) Erfinder: Pommerening, Marc, 31789 Hameln (DE); Heinke, Martin, 31789 Hameln (DE); Vehmeier, Jörg, 32791 Lage (DE)
(74) Vertreter: Jabbusch, Matthias

(57) **Zusammenfassung**

Bei einer Vorrichtung zum Heizen von Räumen, umfassend zumindest eine zentrale Wärmequelle und umfassend den Räumen zugeordnete Heizkreise, die über zumindest eine zentrale Versorgungsleitung für erwärmtes Heizmedium mit der Heizquelle leitend verbunden sind, ist vorgesehen, dass in der zentralen Versorgungsleitung und in jedem Heizkreis jeweils ein Heizmedium-Volumenstrommesser angeordnet ist.

Mit einer Vorrichtung dieser Art ist eine bessere Verteilung der vorhandenen Wärmeenergie auf einzelne Heizkreise möglich.

## Beschreibung

Die Erfindung betrifft eine Vorrichtung zum Heizen von Räumen, umfassend zumindest eine zentrale Wärmequelle und umfassend den Räumen zugeordnete Heizkreise, die über zumindest eine zentrale Versorgungsleitung für erwärmtes Heizmedium mit der Heizquelle leitend verbunden sind.

Vorrichtungen der eingangs genannten Gattung werden zum Heizen von Gebäuden oder Anlagen eingesetzt, welche mehrere Räume haben, gegebenenfalls auch mehrere Raumeinheiten. Bei diesen Raumeinheiten kann es sich beispielsweise um die voneinander verschiedenen Wohnungen innerhalb eines Mehrfamilienhauses handeln, jede Wohnung ist mit einem separaten Heizkreis ausgestattet. Dieser Heizkreis kann mehrere Heizkörper oder auch Fußbodenstrecken oder Flächenheizungen umfassen.

Die voneinander verschiedenen Heizkreise der beispielsweise einzelnen Wohnungen werden durch zumindest eine zentrale Heizquelle bedient, dazu sind die Heizkreise regelmäßig an zumindest eine von der Heizquelle ausgehende zentrale Versorgungsleitung angeschlossen.

Im Stand der Technik wird von der zentralen Heizquelle eine definierte Wärmemenge zur Verfügung gestellt, aus der sich die einzelnen Heizkreise bedienen können. Das Bedienen erfolgt durch Einstellen der Thermostate an den einzelnen Heizkörpern, gegebenenfalls verfügen die Heizkreise über zeitgesteuerte Regelprogramme. Je nach Bedarf entnehmen die Heizkreise also aus der zentralen Versorgungsleitung Wärme, dabei ist jedoch eine definierte prozentuale Verteilung der zur Verfügung stehenden Wärmemenge auf einzelne Heizkreise nicht möglich.

Der Erfindung liegt die Aufgabe zugrunde, eine Vorrichtung der eingangs genannten Gattung aufzuzeigen, mit der eine bessere Verteilung der vorhandenen Wärmemenge auf einzelne Heizkreise möglich ist.

Diese Aufgabe ist erfindungsgemäß dadurch gelöst, dass in der zentralen Versorgungsleitung und in jedem Heizkreis jeweils ein Heizmedium-Volumenstrommesser angeordnet ist.

Mit dem in der zentralen Versorgungsleitung angeordneten Volumenstrommesser ist das Volumen des Heizmediums erfassbar, das für alle Heizkreise in der Versorgungsleitung zur Verfügung steht. Erfindungsgemäß ist vorgesehen, dass auch in jedem Heizkreis ein Volumenstrommesser angeordnet ist, so dass für jeden Heizkreis gleichfalls festgestellt werden kann, wieviel Heizmedium-Volumen in diesen Heizkreis eingeleitet wird. Vorzugsweise ist jeder Volumenstrommesser in dem Rücklauf eines Heizkreises angeordnet.

Mit der Erfassung der Volumenströme in den einzelnen Heizkreisen sowie in der zentralen Versorgungsleitung ist erkennbar, welcher Anteil des zentral zugeführten Heizmediums in welchen Heizkreis geführt wird.

Auf diese Weise ist die erfindungsgemäße Vorrichtung mit einem definierten Volumen an Heizmedium in der zentralen Versorgungsleitung fahrbar. Ausgehend von diesem festen Wert können dann gleichfalls in den Heizkreisen feste Werte eingestellt werden, um somit das Bauwerk, beispielsweise die Isolierung zu überprüfen. Es kann ermittelt werden, welche Zeitdauer zum Erreichen einer bestimmten Temperatur benötigt wird.

Durch die Messung der Volumenströme zwischen der zentralen Versorgungsleitung und den einzelnen Heizkreisen kann vorteilhaft ein hydraulischer Abgleich geschaffen werden.

Um diesen Abgleich regelungstechnisch zu erfassen, sind sämtliche Volumenstrommesser vorzugsweise elektrisch leitend miteinander verbunden. Eine Kombination zwischen den einzelnen Volumenstrommessern und damit zwischen der zentralen Versorgungsleitung und den einzelnen Heizkreisen ist damit ermöglicht.

Nach einer Weiterbildung der Erfindung ist vorgesehen, dass jeder Heizkreis mit einer Regelung ausgerüstet ist, dass diese Regelung mit dem Volumenstrommesser des Heizkreises verschaltet ist und dass diese Regelung mit Sensoren für die Temperaturen des Heizmediums in diesem Heizkreis verschaltet ist. Das Kommunizieren der Volumenstrommesser erfolgt über die jedem Volumenstrommesser zugeordneten Regelungen. Über diese sind die Volumenstrommesser miteinander elektrisch leitend verbunden, darüber hinaus wird durch diese Regelungen die Temperatur des Heizmediums des jeweiligen Heizkreises erfasst. Daneben kann natürlich auch eine erfasste Temperatur des Heizmediums in der zentralen Versorgungsleitung erfolgen.

Der hydraulische Abgleich ermöglicht ein Einsparen von Energie. Es kann eine Optimierung der Leistungen der einzelnen Heizkreise erfolgen, da Kenntnisse über Medium, Volumenströme und Temperaturen vorliegen. Eine leistungsoptimierte Regelung ist die vorteilhafte Folge.

Nach einer nächsten Weiterbildung der Erfindung ist die vorgenannte Regelung des Heizkreises mit einem Sensor für den Druck des Heizmediums in diesem Heizkreis verschaltet. Die Erfassung der Parameter, Temperatur und Druck ermöglicht eine bessere Einschätzung der Zustände in den Heizkreisen. Die Regelung kann anhand des Volumenstroms beziehungsweise Massestroms, des Drucks, der Temperatur oder der Leistung erfolgen. Auch eine Regelung nach dem Differenzdruck innerhalb der erfindungsgemäßen Vorrichtung ist möglich. Ziel ist in jedem Fall eine Optimierung der bereitstehenden Heizleistung, diese soll auf die Heizkreise verteilt werden, dafür benötigte Bauteile sollen nicht zu groß sein.

Diese Bauteile umfassen vorzugsweise in jedem Heizkreis eine Pumpe, Mischer und Drosselventile die mit der Regelung des Heizkreises verschaltet sind.

Ein Ausführungsbeispiel der Erfindung, aus dem sich weitere erfinderische Merkmale ergeben, ist in der Zeichnung dargestellt. Es zeigen:
Fig. 1: eine schematische Gesamtansicht einer erfindungsgemäßen Vorrichtung zum Heizen von Räumen,
Fig. 2: eine Seitenansicht erfindungsgemäßen Vorrichtung gemäß Fig. 1.

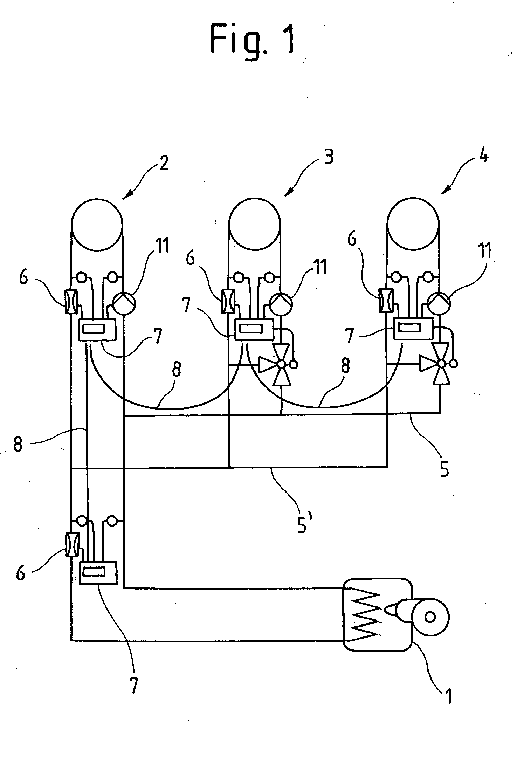

Die erfindungsgemäße Vorrichtung in Fig. 1 weist einen Heizkessel 1 auf. Von diesem Heizkessel 1 werden einzelne Heizkreise 2, 3, 4 mit Heizmedium versorgt. Die Heizkreise 2, 3, 4 sind über eine zentrale (Vorlauf-) Versorgungsleitung 5 an den Heizkessel 1 angeschlossen.

In eine zentrale (Rücklauf-) Versorgungsleitung 5' ist ein Volumenstrommesser 6 eingesetzt. Der Volumenstrommesser 6 misst das durch die Versorgungsleitung 5' fließende Volumen an Heizmedium, er ist dabei mit einer Regelung 7 verschaltet.

Die einzelnen Heizkreise 2, 3, 4 sind jeweils auch mit einem Volumenstrommesser 6 ausgerüstet, auch dieser Volumenstrommesser 6 ist jeweils mit einer dem Heizkreis 2, 3, 4 zugeordneten Regelung 7 verschaltet. Die einzelnen Regelungen 7 sind miteinander über elektrische Leitungen 8 verbunden, schließlich kann eine Aufschaltung der Regelungen 7 mit einem übergeordneten Regelsystem erfolgen.

Jede der einzelnen Regelungen 7 ist mit Drucksensoren 10 verknüpft. In die einzelnen Heizkreise 2, 3, 4 sind noch Pumpen 11 eingesetzt, auch diese sind mit der Regelung 7 verschaltet.

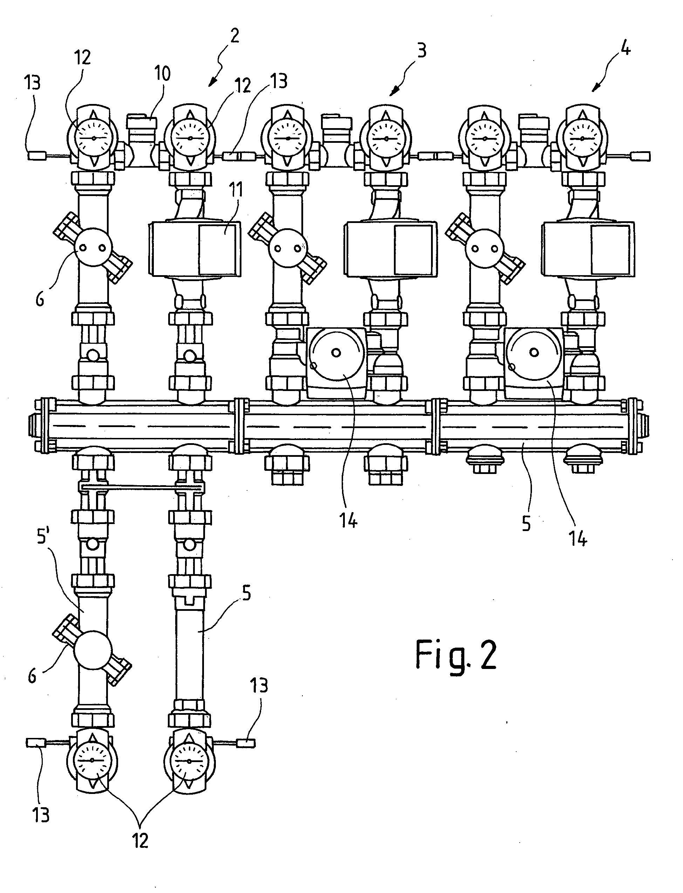

Fig. 2 zeigt den Abschnitt einer Versorgungsleitung, beispielsweise der Versorgungsvorlaufleitung 5. An diese Vorlaufleitung 5 sind die Heizkreise 2, 3, 4 angeschlossen.

Der Heizkreis zwei weist in seinem Vorlauf die Pumpe 11 auf. Zwei Temperaturanzeigen 12 sind Temperatursensoren 13 zugeordnet. Zwischen den Temperaturanzeigen 12 ist der Drucksensor 10 angeordnet.

Im Rücklauf des Heizkreises 2 befindet sich der Volumenstrommesser 6.

Den Heizkreisen 3, 4 sind identische Bauteile zugeordnet, die Heizkreise 3, 4 sind darüber hinaus noch mit Mischermotoren 14 ausgerüstet.

Unterhalb der horizontalliegenden zentralen Versorgungsleitung 5 erfolgt die zentrale Zuführung vom nicht weiter dargestellten Heizkessel her. Dem Rücklauf ist gleichfalls ein Durchflussmesser 6 sowie ein Temperatursensor 13 mit Anzeige 12 zugeordnet. Auch der Vorlauf ist mit einem Temperatursensor 13 ausgerüstet.

## Patentansprüche

1. Vorrichtung zum Heizen von Räumen, umfassend zumindest eine zentrale Wärmequelle und umfassend den Räumen zugeordnete Heizkreise, die über zumindest eine zentrale Versorgungsleitung für erwärmtes Heizmedium mit der Heizquelle leitend verbunden sind,
**dadurch gekennzeichnet,**
**dass** in der zentralen Versorgungsleitung (5) und in jedem Heizkreis (2, 3, 4) jeweils ein Heizmedium-Volumenstrommesser (6) angeordnet ist.

2. Vorrichtung nach Anspruch 1, **dadurch gekennzeichnet, dass** sämtliche Volumenstrommesser (6) miteinander elektrisch leitend verbunden sind.

3. Vorrichtung nach Anspruch 1 oder 2, **dadurch gekennzeichnet, dass** jeder Heizkreis (2, 3, 4) mit einer Regelung (7) ausgerüstet ist, dass diese Regelung (7) mit dem Volumenstrommesser (6) des Heizkreises (2, 3, 4) verschaltet ist und dass diese Regelung (7) mit zumindest einem Sensor (10) für die Temperatur des Heizmediums in diesem Heizkreis (2, 3, 4) verschaltet ist.

4. Vorrichtung nach Anspruch 3, **dadurch gekennzeichnet, dass** die Regelung (7) mit einem Sensor (10) für den Druck des Heizmediums in diesem Heizkreis (2, 3, 4) verschaltet ist.

5. Vorrichtung nach Anspruch 3 oder 4, **dadurch gekennzeichnet, dass** in jedem Heizkreis (2, 3, 4) eine Pumpe (11) eingesetzt ist, die mit der Regelung (7) des Heizkreises (2, 3, 4) verschaltet ist.

6. Vorrichtung nach einem der Ansprüche 3 bis 5, **dadurch gekennzeichnet, dass** die Regelungen (7) der einzelnen Heizkreise (2, 3, 4) miteinander verknüpft sind.
